# DEMANDE DE BREVET EUROPEEN

(11) **EP 0 559 546 A1**
(43) Date de publication de la demande: **08.09.1993**
(21) Numéro de dépôt: 93400526.5
(22) Date de dépôt: 02.03.1993
(51) Int. Cl.: H01Q 1/32

(54) **Antenne hyperfréquence à faible coût pour système émetteur et/ou récepteur de véhicule et ampoule de phare pour sa réalisation**

(30) Priorité: 03.03.1992 FR 9202494
(71) Demandeur: THOMSON-TRT DEFENSE, 78280 Guyancourt (FR)
(72) Inventeur: Canal, Yves, F-92402 Courbevoie Cedex (FR)
(74) Mandataire: Albert, Claude

(57) **Abrégé**

L'invention concerne une antenne hyperfréquence à faible coût pour système émetteur et/ou récepteur de véhicule équipé de phares et une ampoule de phare pour sa réalisation.

L'antenne est réalisée en utilisant le réflecteur du phare comme réflecteur de l'antenne et en disposant l'élément rayonnant (52) dans le bulbe (49) de l'ampoule de phare (44). L'élément rayonnant est constitué par un dipôle (52) monté près des filaments (46) de l'ampoule et est alimenté par un tronçon de câble coaxial (53) traversant le culot (50) de l'ampoule.

L'invention s'applique notamment aux antennes pour radar frontal anticollision pour véhicules automobiles.

## Description

La présente invention se rapporte à une antenne hyperfréquence à faible coût pour système émetteur et/ou récepteur de véhicule équipé de phares. Elle a trait également à une ampoule de phare pour la réalisation de ladite antenne.

L'accroissement de la densité de circulation des véhicules, notamment sur route, et les risques croissants de collision qui en découlent ont amené à effectuer de nombreuses études de systèmes anticollision basés en particulier sur l'utilisation de radars frontaux sur les véhicules pour détecter les obstacles. Pour que ces radars ne surveillent que la route empruntée par le véhicule, il faut que le faisceau émis ait une largeur de quelques mètres à une centaine de mètres, soit quelques degrés. Compte tenu de la place allouée à l'antenne à l'avant d'un véhicule, on en concluait qu'on ne pouvait obtenir la directivité d'antenne souhaitée qu'à condition d'utiliser des fréquences d'au moins quelques dizaines de gigahertz.

Or, à ces fréquences relativement élevées, la réalisation d'un radar présente des problèmes.

L'invention a pour objet une antenne hyperfréquence qui remédie à ces inconvénients, tout en étant d'un coût très faible.

Un autre objet de l'invention est une antenne hyperfréquence mettant à profit l'existence des phares sur un véhicule pour supprimer toute surface supplémentaire nécessaire à l'antenne, tout en réalisant une antenne dont la surface apparente est égale à la totalité de la face avant du véhicule.

Selon l'invention, il est prévu une antenne hyperfréquence à faible coût pour système émetteur et/ou récepteur de véhicule équipé de phares, ladite antenne comportant au moins un élément rayonnant et un réflecteur pour concentrer l'énergie hyperfréquence émise et/ou reçue par ledit élément, caractérisée en ce que ledit réflecteur est constitué par le réflecteur de phare du véhicule et en ce que ledit élément rayonnant est disposé à proximité du foyer dudit réflecteur de phare.

Selon un autre aspect de l'invention, il est prévu une ampoule de phare de véhicule pour la réalisation d'une antenne hyperfréquence, caractérisée en ce qu'un élément rayonnant hyperfréquence est disposé à l'intérieur du bulbe de l'ampoule.

Une telle antenne hyperfréquence est particulièrement avantageuse pour la réalisation de radars anticollision pour véhicules automobiles mais aussi pour tout autre type de véhicule comportant des phares. Par ailleurs, l'invention est également très avantageuse pour la réalisation peu coûteuse de radars de guidage routier ainsi que par exemple de liaisons hertziennes entre véhicules.

L'invention sera mieux comprise et d'autres caractéristiques et avantages apparaîtront à l'aide de la description ci-après et des dessins joints où :
- la figure 1 est une vue schématique montrant le principe d'un système anticollision routier de type connu ;
- la figure 2 est un schéma d'un phare de véhicule automobile ;
- la figure 3 montre un mode de réalisation préféré de l'invention ; et
- les figures 4 et 5 montrent des diagrammes de rayonnement de l'antenne selon l'invention.

A titre d'exemple et pour la clarté de l'explication, on va choisir le cas d'un système radar anticollision pour véhicule automobile.

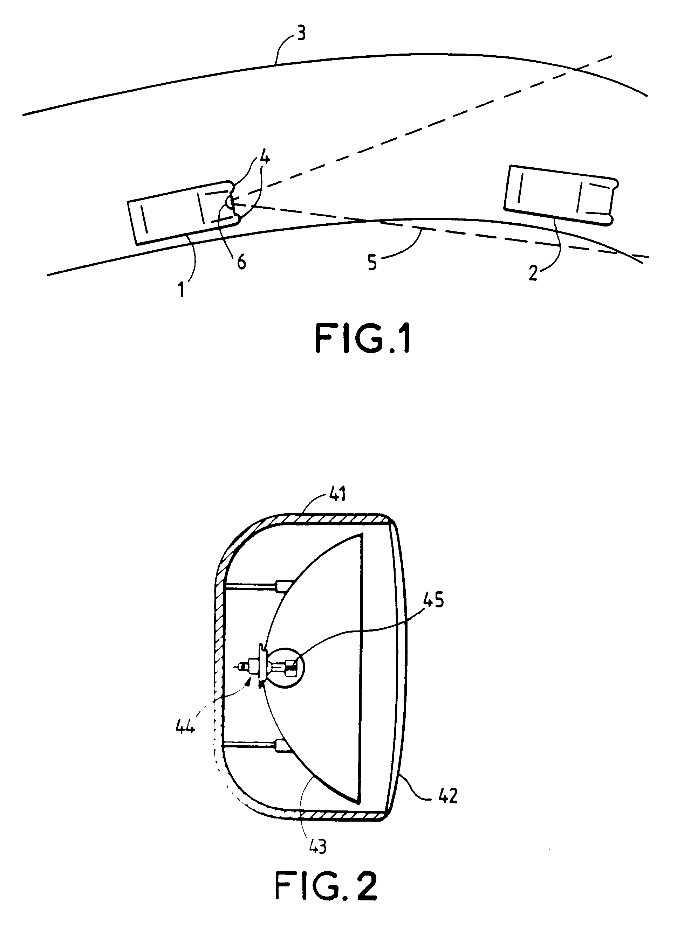

La figure 1 montre sur une route 3 deux véhicules 1 et 2 se suivant. En cas de mauvaise visibilité par exemple, il est apparu très utile que le conducteur d'une voiture puisse obtenir des informations sur les obstacles présents en avant de son véhicule, notamment sur la présence d'autres véhicules, en marche ou à l'arrêt, à courte distance. Pour cela, il a été proposé d'équiper chaque véhicule d'un radar frontal émettant un faisceau étroit (5 sur la figure 1 pour le véhicule 1) permettant la détection des obstacles. Un tel système radar implique de disposer sur la face avant du véhicule 1 une antenne hyperfréquence 6 permettant de rayonner le faisceau 5. Cette antenne, comme on l'a dit, ne dispose que de peu de place et on doit donc fonctionner à des fréquences de quelques dizaines de gigahertz pour obtenir la directivité voulue.

Or, tout véhicule automobile est équipé sur sa face avant de phares 4 permettant l'éclairage de la route de nuit et la signalisation du véhicule de nuit comme de jour en cas de mauvaise visibilité.

La figure 2 représente schématiquement en coupe la structure d'un phare d'automobile classique. Un tel phare comprend, dans un boîtier 41, un réflecteur 43, de forme sensiblement parabolique en général et qui est, soit métallique, soit en un matériau plastique métallisé pour obtenir le meilleur coefficient de réflexion de la lumière. Sensiblement au centre du réflecteur 43 est logée une ampoule 44 de manière telle que le ou les filaments de l'ampoule se trouvent sensiblement au foyer 45 du réflecteur. On obtient ainsi un faisceau réfléchi de rayons sensiblement parallèles qui traversent un verre de protection 42 répartissant convenablement la lumière.

L'invention est basée sur l'idée de mettre à profit le réflecteur parabolique métallique ou métallisé 43 pour constituer un réflecteur d'antenne hyperfréquence et de placer un élément rayonnant à l'intérieur de ce réflecteur et près du foyer de celui-ci.

Si l'on équipe ainsi chacun des deux phares (ou plus s'il y a plus de deux phares), l'association de ces antennes permet soit leur utilisation en réseau, soit l'emploi séquentiel de chacun d'entre elles.

Dans chacun de ces cas, l'antenne résultante présente une dimension apparente voisine de la largeur du véhicule, ce qui permet d'utiliser une fréquence nettement plus faible, par exemple quelques gigahertz, tout en obtenant la directivité souhaitée.

Cela étant, il est clair qu'avec une longueur d'onde de l'ordre de cinq à dix centimètres, la position de l'élément rayonnant par rapport au foyer du réflecteur n'est pas très critique. On peut donc l'installer contre l'ampoule 44 et l'alimenter à travers un trou percé dans le réflecteur. Ceci peut être particulièrement intéressant dans le cas d'ampoules de faibles dimensions telles que les lampes à décharge.

Cependant, de manière préférée pour les ampoules classiques, l'invention propose de monter l'élément rayonnant à l'intérieur même de l'ampoule 44. On pourrait penser à utiliser le filament lui-même comme élément rayonnant. Cependant, compte tenu des dimensions des filaments et supports, la fréquence d'adaptation de l'ampoule est voisine de 1 à 1,5 GHz sans possibilité de la modifier.

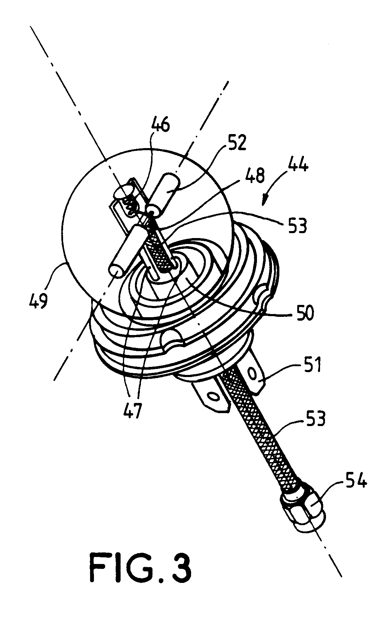

Aussi, un mode de réalisation avantageux est représenté sur la figure 3. L'ampoule 44 est une ampoule classique à deux filaments dont l'un est représenté en 46. Ces filaments sont alimentés et supportés par des tiges supports 47 traversant le culot 50 et aboutissant sur des fiches de connexion 51. L'ensemble filaments-tiges supports est placé sous vide dans un bulbe en verre 49.

L'élément rayonnant selon l'invention est ici constitué par un dipôle 52 monté à l'intérieur du bulbe 49 et près du filament qui doit se trouver au foyer du réflecteur de phare. Ce dipôle 52 est alimenté par un tronçon de câble coaxial 53 traversant le culot 50 de l'ampoule sensiblement axialement entre les tiges 47. De préférence, la portion de liaison coaxiale 53 à l'intérieur de l'ampoule sert de support mécanique au dipôle 52. Le tronçon 53 se termine à l'extérieur par un connecteur coaxial 54.

Bien que l'on ait représenté un dipôle comme élément rayonnant, il est évident que l'on pourrait utiliser d'autres solutions telles qu'un cornet, un fouet, etc...

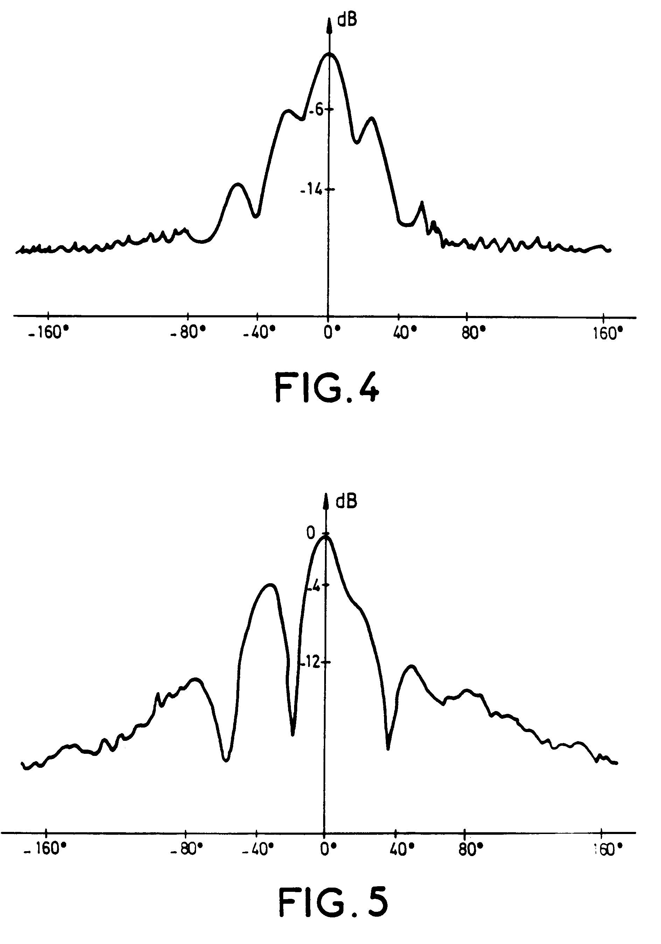

La figure 4 est un diagramme de rayonnement mesuré dans le plan horizontal pour un phare utilisant l'ampoule de la figure 3 à une fréquence de 5,6 GHz.

La figure 5 représente dans les mêmes conditions le diagramme selon un plan vertical.

Bien entendu, l'exemple de réalisation décrit n'est nullement limitatif de l'invention et on pourrait imaginer d'autres variantes sans sortir de son cadre : ainsi la liaison hyperfréquence d'alimentation de l'élément rayonnant pourrait aussi consister en un tronçon de guide d'onde ou de ligne microruban souple ou non. De même, l'élément rayonnant peut être réalisé de diverses manières.

Enfin, l'antenne selon l'invention peut être prévue pour d'autres types de véhicules que les automobiles, pourvu qu'ils soient déjà équipés de phares ou projecteurs.

## Revendications

1. Antenne hyperfréquence à faible coût pour système émetteur et/ou récepteur de véhicule équipé de phares, chaque phare comprenant un réflecteur de phare au foyer duquel est disposé une ampoule avec au moins un filament, ladite antenne comportant au moins un élément rayonnant et un réflecteur, constitué par ledit réflecteur (43) de phare du véhicule (4), pour concentrer l'énergie hyperfréquence émise et/ou reçue par ledit élément, caractérisée en ce que ledit élément rayonnant (52) est disposé à proximité du foyer (45) dudit réflecteur de phare et du ou des filaments de manière telle que cela ne perturbe sensiblement pas le fonctionnement optique du phare.

2. Antenne hyperfréquence selon la revendication 1, caractérisée en ce que ledit élément rayonnant (52) est disposé à l'intérieur de l'ampoule (44) du phare.

3. Antenne hyperfréquence selon la revendication 2, caractérisée en ce que la liaison d'alimentation hyperfréquence (53) dudit élément rayonnant (52) traverse le culot (50) de l'ampoule.

4. Antenne hyperfréquence selon la revendication 3, caractérisée en ce que ladite liaison sert de support mécanique dudit élément à l'intérieur de l'ampoule.

5. Antenne hyperfréquence selon l'une des revendications 3 ou 4, caractérisée en ce que ladite liaison est constituée par un câble coaxial (53).

6. Antenne hyperfréquence selon l'une quelconque des revendications 1 à 5, caractérisée en ce que ledit élément rayonnant est constitué par un dipôle (52).

7. Antenne hyperfréquence selon l'une quelconque des revendications 1 à 6, ledit véhicule comportant à l'avant plusieurs phares espacés, caractérisée en ce que chaque phare comporte un élément rayonnant (52) et en ce que lesdits éléments rayonnants sont alimentés pour constituer une antenne réseau.

8. Ampoule de phare de véhicule pour la réalisation d'une antenne hyperfréquence, caractérisée en ce qu'un élément rayonnant hyperfréquence (52) est disposé à l'intérieur du bulbe (49) de l'ampoule (44).

9. Ampoule selon la revendication 8, caractérisée en ce que ledit élément rayonnant (52) est disposé près des filaments (46) de l'ampoule.

10. Ampoule selon l'une quelconque des revendications 8 ou 9, caractérisée en ce que ledit élément rayonnant est alimenté par une liaison hyperfréquence (53) traversant le culot (50) de ladite ampoule.

11. Ampoule selon la revendication 10, caractérisée en ce que ladite liaison est constituée par un tronçon de câble coaxial (53) terminé par un connecteur coaxial (54).

12. Ampoule selon la revendication 10 ou 11, caractérisée en ce que ladite liaison (53) sert, à l'intérieur de l'ampoule, de support mécanique pour ledit élément rayonnant (52).

13. Ampoule selon l'une quelconque des revendications 8 à 12, caractérisée en ce que ledit élément rayonnant est un dipôle (52) et en ce que ladite liaison traverse axialement ledit culot (50) de l'ampoule.
